# EUROPEAN PATENT APPLICATION

(11) **EP 2 381 189 A1**
(43) Date of publication of application: **26.10.2011**
(21) Application number: 10729117.1
(22) Date of filing: 07.01.2010
(51) Int. Cl.: F24J 2/54

(54) **SELF-ORIENTING TILTING SOLAR ROOF**

(30) Priority: 12.01.2009 ES 200900068
(71) Applicant: Universidad Politécnica De Madrid, 28040 Madrid (ES)
(72) Inventor: ADELL ARGILÉS, Josep María, E-28040 Madrid (ES); VEGA SÁNCHEZ, Sergio, E-28040 Madrid (ES); BEDOYA FRUTOS, César, E-28040 Madrid (ES); GARCÍA SANTOS, Alfonso, E-28040 Madrid (ES); NEILA GONZÁLEZ, Javier, E-28040 Madrid (ES); KLAINSEK ZIZMOND, Juan Carlos, E-28040 Madrid (ES)
(74) Representative: Carvajal y Urquijo, Isabel
(86) International application number: PCT/ES2010/000003
(87) International publication number: WO 2010/079249

(57) **Abstract**

The invention relates to a self-orienting tilting solar roof **characterized in that** it comprises a roof (1) having a square, rectangular or polygonal shape, which can oscillate by means of the barycentre or central point of equilibrium (6) thereof under the action of forces applied at at least three or more points (9) at a clear distance from one another and from the central bearing point (6), thereby preventing the roof from extending beyond the initial perimeter thereof in the horizontal position.

## Description

### FIELD OF THE INVENTION

The objective of this invention is the construction of a roof panel of a building that can orient itself towards the sun all of the time, but always remaining within the confines of the ground plan of the building, and therefore without overhanging the eaves themselves, starting from the maximum surface of the ground plan offered by the building, which allows it to balance on its own centre of gravity.

The patent overcomes the technical problem of the existing industrial turning panels when they are arranged on top of a building at its maximum dimension where, when it sweeps a surface that overhangs the building itself. The patent also avoids it needing to surround both the ground plan and the angle of the gables of the traditional roof panels of a building when wanting to cover it with solar panels.

### BACKGROUND OF THE INVENTION

Traditionally, the buildings have inclined roof panels to allow rainwater to run off. They are usually set out on the top of the building itself with several gables that normally direct the water towards the different facades.

Those buildings constructed in tropical lands usually have panels angled at between 30° to 45° to facilitate water runoff, as opposed to houses with flat roofs (0°) in desert areas around the equator, where it hardly ever rains. Nordic countries whose roofs have are at a 60° angle to avoid the accumulation of water in the form of snow.

From this generic geometrical structure, favored to facilitate water runoff from the roofs, the gables of the buildings have a determined slope and different orientations.

Therefore a building with a square or rectangular ground plan, the roof panel could correspond to one, two, three or four pitches which could allow the water to run off to four different facades. This means that the gables go in different orientations of the space and could lead to four possible different cases:
A single gable which could point in any direction;
Two gables which point in opposite directions;
Three gables with two pointing in opposite directions and the third at an intermediate, and
Four gables all pointing in different directions: two and two.

At the moment of wanting to take advantage of the sunshine impinging on the roof panel that will benefit from the solar energy, be it photovoltaic (to obtain electricity) or thermal (for domestic hot water), it is essential to take the orientation of the panel into account, with the four aforementioned possibilities.

At the same time, it is well known that in order to take full advantage of the sun's energy, it is necessary to place the solar panel perpendicular to the rays of light falling on them, which means that for any building, there are some ground plans with better orientations than others.

In this respect, it is evident for the same ground plan surface with a single gable oriented towards the south, it receives more solar energy through direct radiation (66%) than if the same roof panel were oriented towards the east (25%) or to the west (25%) and even less of oriented towards the north (0%).

In other words, for the same building, the gable oriented towards the north will not receive any direct radiation and capture almost no energy, while the other two gables in the building facing east and west will capture less energy that that obtained by the gable facing the south but with the same ground plan surface.

When it is necessary to capture as much solar energy as possible on the roof panel of a building, the need arises to be able to orientate the panel of the said building constantly towards the sun, which gives rise to the establishment of a roof panel that tracks the sun.

If the shape of the said panel were circular, and it rotated on an axis perpendicular to its circle, its rotation would not change the external geometry. On the other hand, if it were a square or rectangular panel; rotating on an axis perpendicular to it, the corresponding parallelepiped would describe a variable geometry in space in relation to the rotation.

As the solar panels currently being developed, start from rectangular geometries produced in silicon 'wafers' which are the basis for the aforementioned panels, we find ourselves with the problem that the parallelepiped geometry of the panels would vary the ground plan of the building that they are distributed on, where it occupies the entirety of the roof panel.

This means that if we want to occupy all of the square or rectangular surface of the roof panel of a building with a solar panel in order to obtain the maximum capture with it, this roof panel cannot rotate around itself as it will overlap the ground plan of the building itself.

In the face this dilemma, there are traditionally two opposing solutions; each with its advantages and disadvantages.
- First: make a larger fixed panel the same size as the ground plan
- Second: make a panel smaller than the ground plan that does not overlap during its rotation

Either of these two options limits in part the maximum advantage that could be taken from the panels laid out on the roof panel of the building, following the new invention set out below.

From the previous analysis it is concluded that those buildings built in tropical areas, that the horizontal ground plan of the roof (0°) is totally suitable for the capture of solar radiation that impinges on it during most of the day.

On the other hand, in Nordic countries and those in the southern hemisphere, the structure of a roof panel with only one ground plan of maximum proportions and a pitch (60°) facing the south (or north in the southern hemisphere), is the most beneficial for the capture of solar energy.

In the tropics, with intermediate orientations (for 30° to 45°), where the most populated countries are to be found, the variation in the orientation between the east, south and west of the solar panels on the roof panel are of greater interest than the two aforementioned cases.

The panels are industrially designed to rotate to track the sun. However they have the disadvantage of a central support of large dimensions, together with their corresponding large foundations as the panel has to be supported on a large single pillar because of the pressure and the hurricane winds that might damage it. The central pillar is not the most suitable method for a central support in an habitable building.

### SUMMARY OF THE INVENTION

In the interests of solving the aforementioned technical problems, the self-orientating, tilting solar roof panel, object of this new invention, proposes to subdivide the traditional roof panel into two different and therefore novel roof panels, as they have their usual features separated:
- The upper roof panel goes on to be active and mobile, self orientating towards the sun, allows snow to run off and can allow rainwater to run off or not (towards the lower roof panel) but never compromises the insulation of the building
- The lower roof panel becomes passive, and it is fixed to the building itself and being able to allow water to run off (if it is not collected on the upper roof panel). It is also part of the insulation of the building in order to avoid energy losses through it.

Both roof panels resolve their own compromises such as their weight, the wind, snow, etc.

In order that the upper roof panel is able to achieve its objective of tracking the sun, without its geometry overlapping the perimeter initially established by the geometry of the ground plan (with its roof panel and eaves), while the lower roof panel remains fixed, the following invention has been developed.

It is a square or rectangular roof panel, which in principle is supported at its centre of gravity, thus making it capable of balancing on itself, so as to enable it to orient itself at any time towards the façade of the house upon which the sun is shining throughout the day.

The invention means that the square or rectangular roof panel on the ground plan, horizontally laid out, tilting on its centre of gravity so as to be able to move any of its sides or vertices, with the area generated on the ground plan being, logically, is less than that of the roof panel in its horizontal position.

This invention contrasts, therefore, with the traditional solar roof panels which rotate ( instead of balancing) on certain axes, and where on its route it overlaps the surface that it initially occupies on the floor, which does not happen with our invention.

In order to achieve the functioning of the proposed invention, an appropriate mechanism is necessary capable of varying the orientation of the roof panel at all times, as well as making it stable not only as a result of its load, but also against the action of the wind, snow, etc.

The mechanism consists basically of four cables, located at an appreciable distance from the centre of gravity and support of the tilting roof panel, which are secured from below at four opposing points and which, in reality, there are just two interrelated cables placed diagonally across the rectangular roof panel.

Therefore each of the diagonally opposed cables acts in one direction at the extremes (tensioning, shortening) at the same time as the opposite extreme but in a contrary manner (not-driving, lengthening). Of course the aforementioned action can take place in reverse (lengthening first and shortening later, that is, tensioning).

In order to achieve the aforementioned effect, each of the diagonally arranged cables works by means of its corresponding motor which, when turning, works in conjunction with the driving motor of the other cable. Through this method the dimensions of the cables, secured to the lower part of the mobile roof panel, at the diagonally opposed extremes may be lengthened or shortened.

The whole of the roof panel is perfectly designed with both its masses and weights tilting by a support at its centre of gravity, which could even be on top of it so as to facilitate its resting position in the horizontal position.

That is why it has the advantage of requiring very little driving effort to move it from the horizontal to the angle necessary for the desired orientation. This is technologically much simpler than pushing or turning the traditional roof panels as the cables that are used are only guy ropes, which is why they use very little energy.

Clearly, for the proper working of the entire mechanism, a series of bearings and pulleys (cogs or otherwise) are required apart from the cables driven by the motors to transmit the efforts desired for the tracking of the said cables in accordance with the living spaces and exact location of the room for the machinery.

However, finding a solution for the automated mechanized functioning that would require the corresponding domotics with its appropriate software in accordance with the time of year and time of day, which could also give rise to the manual balancing of the roof panel through the action of the appropriate pulleys and tackle system.

Although it is evident that the greater the arm or distance between the central support of the roof panel and the tensile cables that support it, it is possible that for reasons of design or aesthetics, that it would be preferable to locate the aforementioned cables at the extremes of the area of the rectangular solar roof panel, where even though they are more visible, they are more effective as a result of the maximum separation possible, or, on the other hand, if it is preferred to locate them under the central area of the roof panel, where they are much less visible, although they consume more energy in order to achieve the same effect as they have a smaller arm or distance in respect to the support of the roof panel on its centre of gravity.

When dealing with a roof panel that balances on a central support system to which a tensioning is added at one, two, three or four different points, according to the mechanism of the tensioning system, the roof panel becomes very stable against the action of the wind, making it resistant to even the strongest gusts leaving it immobile at the desired solar angle.

In any case there is an emergency system or zero point position in the machinery system that balances the roof panel that secures it in the horizontal or resting position which tenses all four cables at the same time.

So as to ensure that the roof panel has even more strength in its horizontal position in case of a hurricane, in which the action of the wind will affect it less, there is an automatic device made up of compression supports that complement the cables at its four extremes in order to obtain a total balance when creating four post-tensile supports under the roof at its extremes or in the central area as well as its barycentric support.

As regards the central support, it requires a ball joint capable of allowing there roof panel to turn at least in the directions; east, south and west, although it would be desirable for the ball joint to turn even to the north so as to facilitate the cleaning of the roof panel by acting on its four edges.

Clearly the turning ball joint includes its corresponding securing mechanism to avoid high-speed gusts of wind generating a force capable of lifting the weight of the roof panel, acting said ball joint as traction, instead of a compression in which the transmission of forces are referred to.

The turning solar panels usually have a central support of large proportions, since it is also needed to absorb the weight of the roof panel and the action of the wind of a much greater value than the previous one.

The design characteristics of the proposed invention, when setting out a respectable distance between the traction points of the struts and the central support, it is easy as a whole to resist the action of the wind at all times (together with the weight of the roof panel) that is generated at the central support, which could be of great proportions.

In spite of the aforementioned, the system allows a simple deviation of the central load below the barycentre of the roof panel, towards 3 or more extreme points, which are usually four (although it could also be five, six or eight) if it is a construction with an orthogonal structure.

In order to achieve this objective, the ball joint must be placed on a pyramid structure at an angle of 15°, 30°, 45° or 60° in respect to the horizontal, so as to allow the appropriate balance of the roof panel in relation to the sun, as set out by the latitude at which the building is located.

The aforementioned pyramid structure may be complemented by hydraulic jacks capable of varying its angel and/or height in accordance with the time of the year and therefore, in accordance with the angle of the sun, so as to adapt the whole of the roof panel easily in its turning, until it becomes orthogonal to the rays of solar light.

The aforementioned roof panel, although conceived with the aim of optimizing the solar capture of a building with a certain ground plan, it does not mean that instead of covering just homes or buildings, it can also be applied advantageously to car parks, areas of shade, garden areas etc., given that the technology of the invention can be adapted perfectly to a wide spectrum of applications.

Finally, it is logical to suppose that together with the mechanical and smart system, a manual variation of it be added, just in case the electricity or computer system fails in order to be able to operate the roof panel so as to place it in the required orientation or logically, place it in its resting horizontal and shored up position on the face of the risks of strong winds.

The Self-Orienting, Solar Roof Panel, must allow the rotation of the roof panel in accordance with the latitude of the location in which it is used. As it may be used in prefabricated or mobile homes which are able to change its geographical location, the possibility of complementing the central support of the roof panel with at least one hydraulic jack must be considered which will allow it to vary its position of origin, with the aim of being able to vary, more or less, the balancing angles of the roof panel in relation to its geographical location and the position of the sun.

In thinking that its industrial development could condition the ultimate definition of the technology to be used in the movement of the balancing solar roof panel, as an alternative to a series of cables or chains, together with the motors and pulleys, jacks might be applied to their corresponding hydraulic circuits combined with its corresponding smart control system.

When the application and use of the present invention does not correspond to its location in a fixed or mobile cover, the present invention is also useful as umbrella orcovering of any kind, or any ground.

Throughout the description and claims the word "comprise" and its variants are notintended to exclude other technical features, additives, components, or steps. For those skilled in the art, other objects, advantages and features of the invention will become apparent in part of the description and part of the practice of the invention.The following examples and drawings provided by way of illustration and are not intended to be limiting of the present invention. Furthermore, the present invention covers all combinations of particular embodiments and preferred set forth herein.

### BRIEF DESCRIPTIOF OF THE DRAWINGS

Figure 1.- Shows, as a schematic representation in perspective, a two-storey home under a roof pitched in four slopes and with eaves.
Figure 1a.- Shows, in perspective representation, the A-A' section shown in figure 1, where it is seen that the roof has a slope of 15°.
Figure 2.- Shows, as a schematic representation in perspective, a two-storey home under a roof pitched in four slopes and with eaves.
Figure 2a.- Shows, in perspective representation, the B-B' section shown in figure 2, where it is seen that the roof has a slope of 30°.
Figure 3.- Shows, as a schematic representation in perspective, a two-storey home under a roof pitched in four slopes and with eaves.
Figure 3a.- Shows, in perspective representation, the C-C' section shown in figure 3, where it is seen that the roof has a slope of 45°.
Figure 4.- Shows, as a schematic representation in perspective, a two-storey home under a roof pitched in four slopes and with eaves, in which the interior structure of the roof panel can be appreciated.
Figure 4a.- Shows, in perspective representation, the D-D' section shown in figure 4, where the geometrical characteristics of the roof panel can be seen.
Figure 5.- Shows, as a schematic representation in perspective, a two-storey home under a roof pitched in four slopes and with eaves, in which the interior structure of the roof panel in figure 4 can be appreciated, on which another equivalent one has been put in but in an inverted position leaving its upper surface horizontal and supporting it in its centre.
Figure 5a.- Shows, in perspective representation, the E-E' section shown in figure 5, where the geometrical characteristics of the lower roof panel can be seen and the upper roof panel inverted and supported at its centre.
Figure 6.- Shows, as a schematic representation in perspective, the upper roof panel inverted as in figure 5, where the support structure of the lower roof panel and the geometry of the upper roof panel has been simplified.
Figure 6a.- Shows, in perspective representation, a transversal section of figure 6, where the centre of gravity "G" of the upper roof panel can be seen.
Figure 7.- Shows, in perspective representation, the balancing of the roof panel in figures 6 and 6a, by its central support point and in the perpendicular ground plan of an edge of a building or at 90°.
Figure 7a.- Shows, in a schematic ground plan, the balancing of the roof panel in figure 7, carried out at 90° in respect to a facade.
Figure 7b.- Shows, in a schematic section, the balancing of the roof panel in figure 7 and 7a, a 90° of a facade.
Figure 8.- Shows, in a schematic perspective, the balancing of the roof panel in figures 6 and 6a, by its central support point and in the perpendicular ground plan of an edge of a building or at 45°.
Figure 8a.- Shows, in a schematic ground plan, the balancing of the roof panel in figure 8, carried out at 45° in respect to a facade.
Figure 8b.- Shows, in a schematic section, the balancing of the roof panel in figures 8 and 8a, at 45° of a facade.
Figure 9.- Shows, in a schematic section, the instrumentation necessary to generate the movement of the upper roof panel in figures 6, 6a, 7, 7a, 7b, 8, 8a and 8b.
Figure 9a.- Shows, in a schematic perspective, the movements necessary in the instrumentation applied in order to generate the balance of the roof panel at 90° in respect to a facade.
Figure 9b.- Shows, in a schematic perspective, the movements necessary in the instrumentation applied in order to generate the balance of the roof panel at 45° in respect to a facade.
Figure 10.- Shows, in a schematic perspective, the joint application of an inverted upper roof panel on another lower one, together with the instrumentation necessary to generate the movement of the upper roof panel as detailed in figures 9, 9a and 9b.
Figure 11.- Shows, in a detailed perspective and an assembly in 3 phases, the realization of a possible main structure of the inverted upper roof panel, together with a possible cutting of the secondary structure which in turn supports a generic cutting of the solar, photovoltaic and thermal panels.

### DETALILED DESCRIPTION OF THE PREFERRED EMBODIMENTS

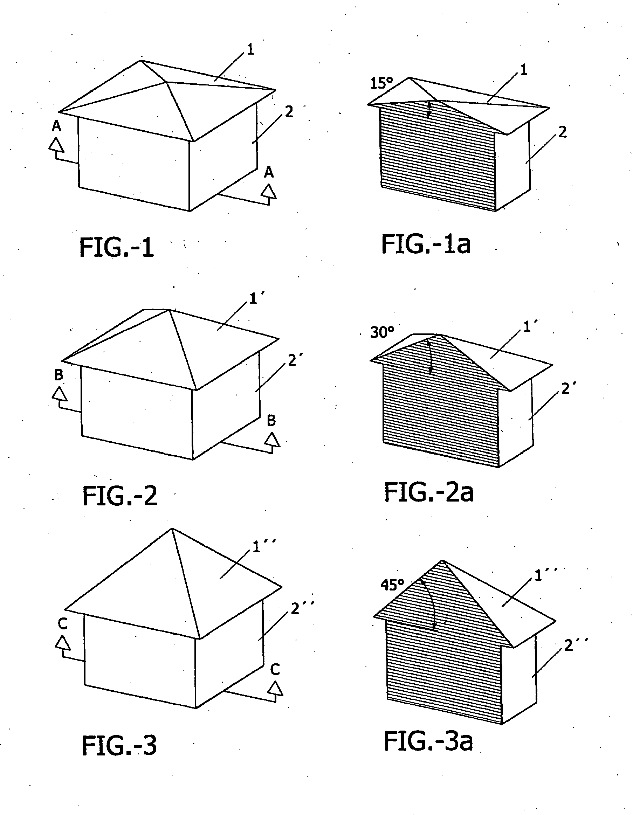

So, in the three initial figures (figures 1, 2, 3), with their corresponding sections (figures 1a, 2a, 3a), a two-storey building can be seen (2, 2', 2") with roof panel inclined in 4 slopes (1, 1', 1 "), with variations in the slope of its gables of 15°, 30° and 45°, clearly differentiated in the sections, the prismatic part of the building, the triangular section of the roof with its different slopes.

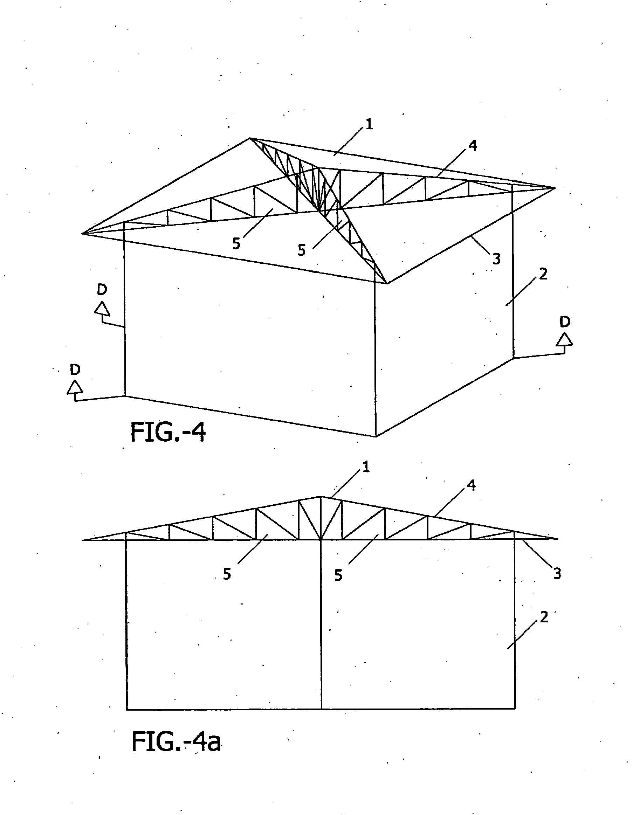

Going on to a more detailed form in the specific case of a roof with a 15° slope(1), in figures 4 and 4a, you can see in both perspective and in section, not only the volume of the two-storey building (2) below which there is a roof panel (1) made up of 4 gables with their corresponding eaves (3) and hips (4), that covers a framework structure (triangulated) (5), that supports the perimeter of the structure.

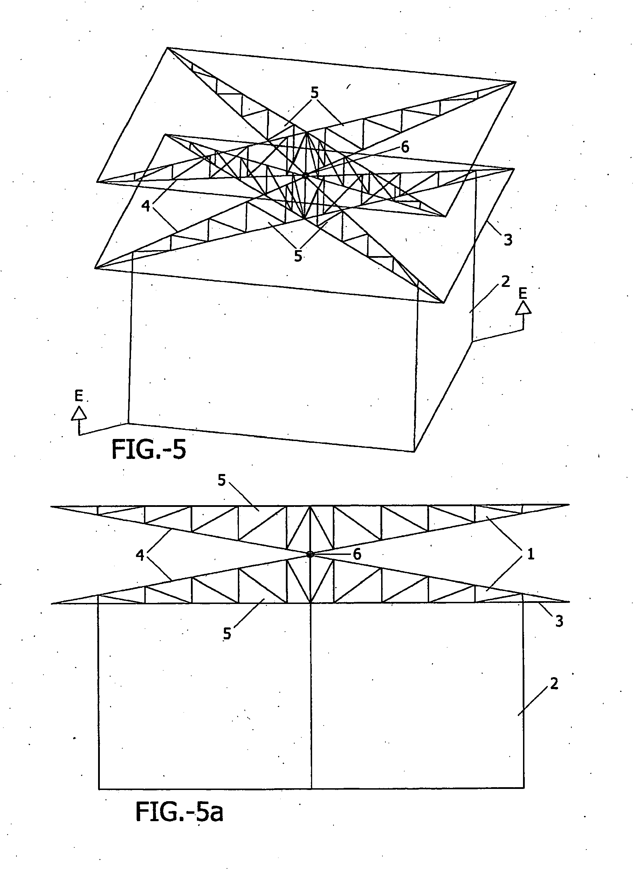

If we look at figures 5 and 5a, that start from a schematic perspective of the previous dwelling (2) with its traditional 15° slope (1) and with another roof panel inverted on top of it (1), supporting it at the point where the hips converge (4), with its corresponding structural frameworks (5), that is, at its apex (6), we have a horizontal ground plan looking upwards towards the firmament. This is precisely what we are interested in having in order to be able to organize a solar panel of the maximum proportions possible from the floor of the building and looking towards the sky, although we still need to be able to orient it in the specific direction of the sun at all times.

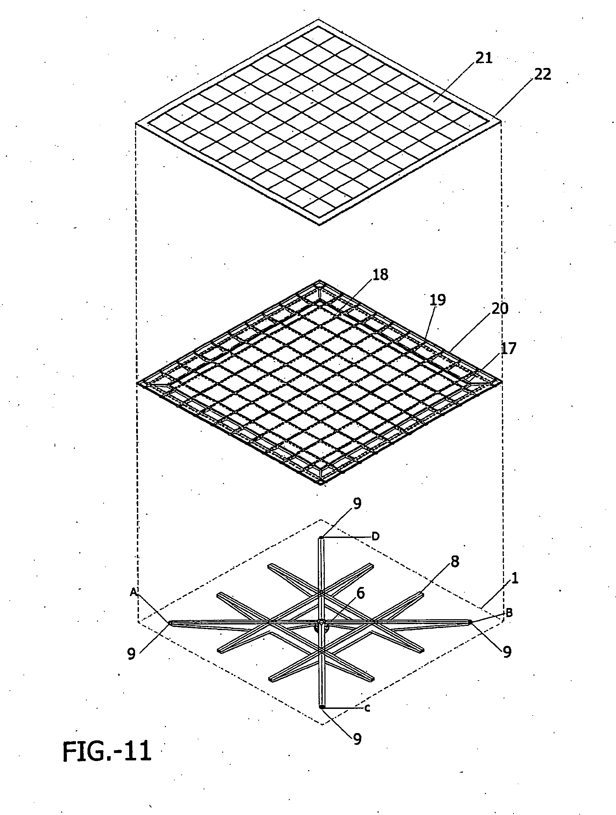

Precisely, the meeting point between both roof panels, the traditional one (1) and geometrically inverted one, is the apex between both roof panels, made up of a rotating ball joint (6) so as to achieve a suitable orientation of the solar panels laid out on top of it, as set out previously in numbers (21) (22) and figure 11

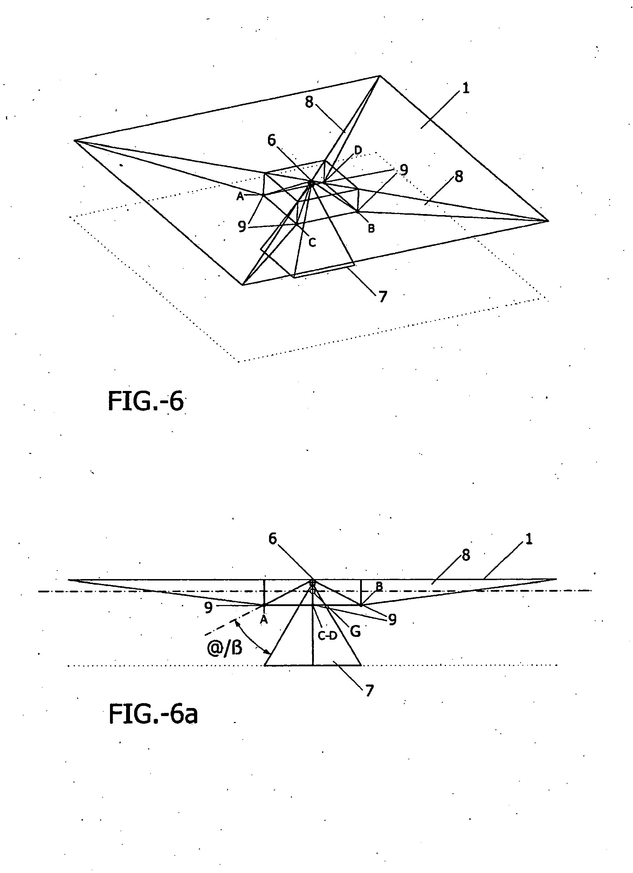

As detailed in figures 6 and 6a, it is evident that the structural solution of the roof panel with a large edge, detailed in figures 4, 4a, 5 and 5a, from the triangular frameworks (5), can be simplified when it is necessary to optimize the structure of the roof panel (8) with the minimum edge to support the roof panel covered with the corresponding solar cells (1), on the central structural support (7), which is also simplified in this case, making up a four-sided pyramid.

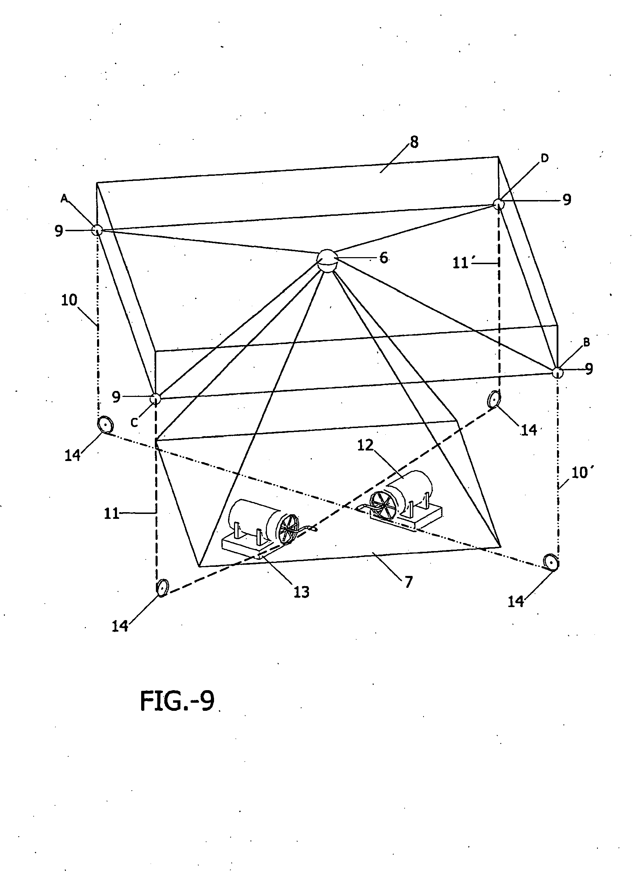

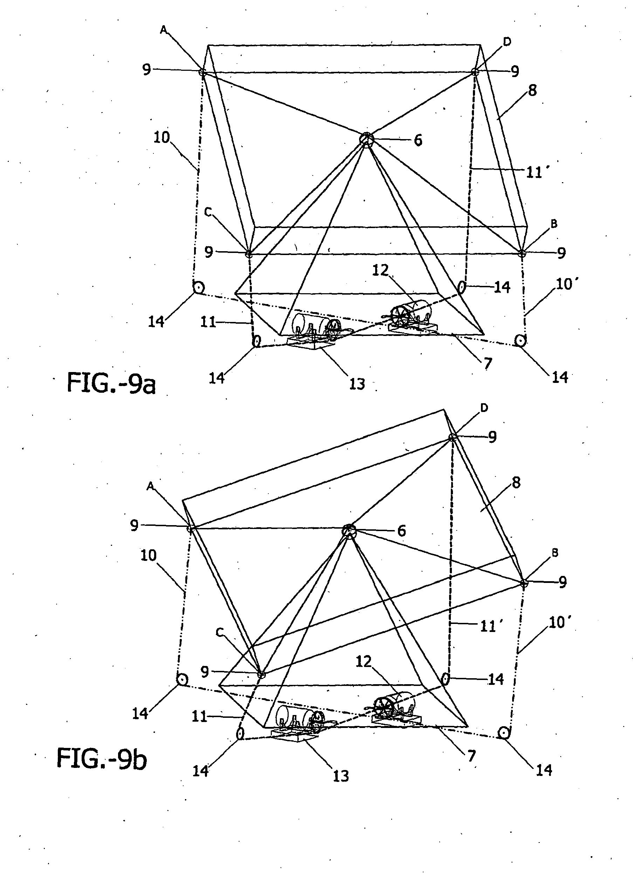

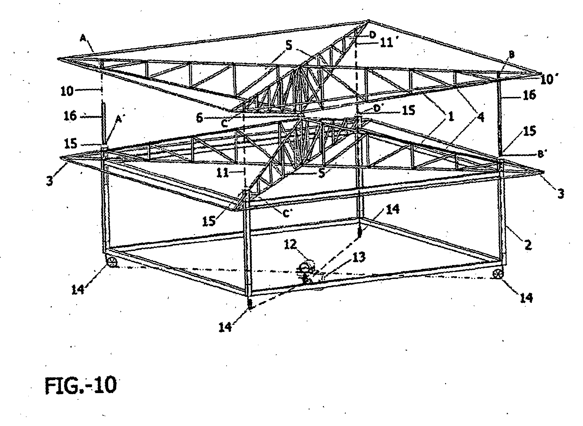

In figure 6 referring to the image of the schematic perspective, and in figure 6a, referring to its transversal section, you can see the existence of at least four points (9) clearly separated from the central support (6), and perfectly differentiated as A, B, C, D, which allow the connections of the roof to be created (1) with the appropriate instrument (which will be detailed later in figures 9, 9a, 9b and 10), in order to generate the movement capable of pointing the position of the roof panel in the direction of the sun at all times.

Note in figure 6, how the ground plan of the roof panel (1) that makes up the solar panel, takes up the same area as the projection to points of the lower roof panel. Also note that in figure 6a, as the support ball joint (6) of the structure (8) of the roof panel (1) is located on top of the lines of dots and dashes that indicate the centre of gravity "G" of the aforementioned roof panel. The fact that the support of rotating point (6), is more elevated than the centre of gravity "G", offers us the security that the roof panel (1) remains in the horizontal plane at all times, provided that it is not requested on any side, assuming that there is no wind.

As the wish of the invention aims precisely to seek different angles of the aforementioned roof panel apart from the horizontal, in order to orient itself towards the sun at all times, the problem arises of its being able to withstand the action of the wind whilst, at the same time creating a suitable orientation given the case. This can be seen in figure 6a. It is able to solve it by achieving the desired rotating angels "α"ó "β" on the ball joint (6), undertaken precisely by the points (9) differentiated by A, B, C, D, as detailed in figures 9, 9a and 9b.

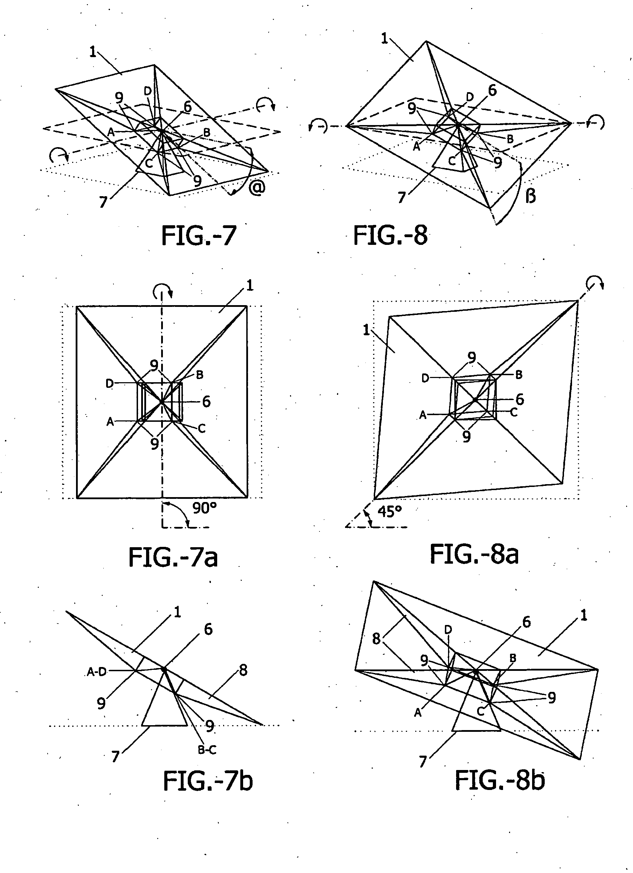

By looking at figure 7, it can be seen as how the horizontal plane of the roof panel (1) indicated as points, can balance at an angle "α" from the ball joint (6), where it transmits its weight, which it can do in any of the direction of its four facades at 90°, totaling four positions.

Equally, by looking at figure 8, it can be seen as how the horizontal plane of the roof panel (1) indicated as points, can balance at an angle "β" from the ball joint (6), where it transmits its weight, which it can do in any of the direction of its four facades at 45°, making up four intermediate positions from the previous ones, thus totaling eight.

In order to demonstrate that in any of the eight positions brought about from the balancing of the roof panel (1) detailed in figures 7 and 8, at 90° and 45° of the respective facades, figures 7a and 8a are added where the points of the ground plan of the roof panel in a horizontal position are drawn, showing at all times that the balancing of the roof panel (1) that allows it to orient itself towards the sun, is able to prevent it from overlapping the perimeter of the ground plan in all of its possible positions and its intermediate values.

The previous graphic demonstration is extended in figures 7b and 8b, with the lateral view of the schematic perspective of figures 7 and 8, where the capacity for the rotation of the structure (8) of the roof panel (1), on the ball joint (6) at the upper extreme of the pyramid support (7) can be seen.

In the figures that we have just analyzed (7, 7a, 7b and 8, 8a, 8b), the points (9) differentiated as A, B, C, D can be seen, where the structure (8) of the roof panel is fixed (1) the instruments capable of generating its movement at the time of withstanding the action of the wind.

The minimum instruments necessary to bring about the balancing movements for the solar tracking of the roof panel is detailed in figures 9, 9a, 9b and 10, and start from the central support of the ball joint (6), together with the mechanical operation on the points (9) A, B, C, D, taken as two by two (A-B and/or C-D).

In figure 9, the schematic perspective and in the horizontal position are shown, the instruments appropriate to permit the movement of the structure (8) of the roof panel on top of the pyramid to take place (7) by means of the ball joint (6) and which mainly consists of two cables: cable (10-10') which joins A to B, and has been drawn as a dotted and dashed line; and cable (11-11') which joins C to D, and has been drawn as a discontinuous dashed line. Both cables are operated by their respective motors (12) (13) and circulate by means of their corresponding pulleys (14). All of the movement is controlled and governed by a smart (domotic) computer system (which is not drawn) and which takes into account the characteristics of the solar cycle every day.

As can be seen in the graph in figure 9, the motor (12) operating the cable (10-10') can vary in its rotation, positions A and B, by lengthening or shortening the extremes (10-10') of the aforementioned cable. Equally, as can be seen in the graph in figure 9, the motor (13) operating the cable (11-11') can vary in its rotation, positions C and D, by lengthening or shortening the extremes (11-11') of the aforementioned cable.

The coordinated operation of the cables (10-10') and (11-11') by means of their motors (12) (13), makes the extremes A-B and C-D, laid out diagonally and secured to the structure (8), vary their position between the eight aforementioned ones (and their intermediate variations), as can be seen in the following figures (9a and 9b), and all of it, at the moment, being able to withstand the action of the wind.

In figure 9a, the schematic perspective is detailed, the balancing of the roof panel at an angle of 90° in respect to any of the facades, achieved from the variation of the length undergone by the cables (10-10') (11-11'). So it can be seen by comparing the previous figure 9, how the cable (10-10') is now longer than before at point A, at the same time as the other is shorter at point B. On the other hand, it can also be seen that the cable (11-11') is now shorter than before in its position C, as opposed to the longer one now at its position D, in respect to that seen in the previous figure 9. All of this is due to the rotation generated by the corresponding motors (12) (13) in the first and second case respectively.

In figure 9b, the schematic perspective can be seen, the balancing of the roof panel at an angle of 45° in respect to any of the corners, achieved from the variation of the length experienced by the cables (10-10') (11-11'). So it can be seen by comparing the previous figure 9, how the cable (10-10') does not vary at all in any of the stretches at point A or at point B. On the other hand, it can be clearly seen that the cable (11-11') is now shorter than before in its position C, as opposed to the longer one as before at its position D, in respect to that seen in the previous figure 9. All of this has been due to the rotation generated by the motor (13) on the cable (11-11'), by keeping the motor (12) on the cable (10-10') still.

In figure 10, the explanations made on the mechanical working of the balancing of the roof panel are grouped together in figures 9, 9a and 9b, on the roof panel of a traditional building, with its inverted solar panel proposed in this invention. The traditional roof with four slopes (1) with its framework structure (5) is laid out on the building (2), with a high ground plan with perimeter supports. The inverted roof panel (1) placed on top of the traditional one (1), transmits its weight by means of a ball joint support(6), which, by means of its framework (5) reaches the perimeter supports (2) of the roof panel that has its eave (3) and its hips (4), that join at the apex (6).

In the drawing of figure 10 itself, it can be seen how the solar roof panel is in its horizontal position, since the cables (10-10') and (11-11') are of the same length at the extremes A-B, C-D, as the motors (12) (13), have not yet generated any rotation to change the balance of the roof panel to any specific position.

By paying closer attention, it can be seen that I relation to each point (9) A, B, C, D, there is a lower homonym A', B', C' D', laid out on the structure (2) of the building, in such a way that the four rotating positions typified by the roof panel (as well as the intermediate ones), the upper roof panel can support itself on the lower one on by linking alternatively the corresponding points A with A', C with C', B with B' or D with D', thus giving rise to the variation in the length and tension of the cables (10-10') and/or (11-11') in accordance with the coordinated working to the right, to the left of stationary, of each of the motors (12) (13).

Points A' B' C' D', have been drawn as rubber spheres (15) which avoid vibrations of the roof in its balance when secured to them. At the same time, and with the aim of withstanding hurricane force winds, telescopic supports have been deployed (16) which are set into the structure (2), overlapping the aforementioned (A' B' C' D') to join them to the corresponding points (A B C D). The objective of this mechanism is that the aforementioned sets of points (A-A'; B-B'; C-C'; D-D') can remain perfectly static as a result of the combined effects of the tensioning of the cables (10-10') (11-11') which by circulating through their interior compress the said telescopic tubes (16) once extended and secured in their maximum lengthened position, so as to achieve a stable, horizontal and shored up leveling of the solar roof panel.

Figure 11 shows in a apilable dissected perspective, how the roof panel (1) shown as points, houses the structure centrally (8) and which rests on its ball joint (6) and which can be operated by means of points (9) A, B, C, D.

On this aforementioned structure (8), its top perimeter is approached (17), together with a dissection of the substructure (18) with its perimeter supplement (19), which will support the square photovoltaic solar panels (21) in the central part of the roof panel and the lengthened thermal solar panels (22) at its perimeter. All of this topped with an edge profile (20).

## Claims

1. A self-orientating tilting solar roof **characterised in that** it comprises at least:
one roof (1) designed in a square, rectangular or polygonal shape configured for oscillating on its barycentre or central equilibrium point (6) due to the stresses applied at at least three points (9) spaced from one another and between its central bearing point (6) such that its perimeter in the horizontal position is not exceeded; and oscillating means attached to the roof (1) by at least three points (9) and configured to apply stress on said points.

2. The roof according to claim 1, **characterised in that** the oscillating means of the roof (1) comprise at least:
attachment means (10-10', 11-11') joined in at least three points to the lower part of the roof (A, B, C, D);
a plurality of motors (12, 13) configured to operate the attachment means (10-10') (11-11') and duly coordinated with one another by an automated computer switchboard;
and wherein said oscillating means of the roof (1) are further configured to reach the suitable oscillation angle, as needed, facing the sun at all times by means of varying the length of the attachment means (10-10', 11-11') after going through the corresponding pulleys (14) between the operating point of the force of the motor (12, 13) and the application point thereof under the roof (1).

3. The roof according to the preceding claims, **characterised in that** it further comprises a system of stops (15) or of additional securing configured to prevent the vibration of the roof (1) with the wind.

4. The roof according to claim 3, **characterised in that** the system of stops (15) or of additional securing is controlled by variable pitch motors (12, 13) to prevent sudden movements, as well as adjustment springs to control the tensions of the attachment means (10-10', 11-11').

5. The roof according to the preceding claims, **characterised in that** it can further incorporate a roof movement retaining system in a safety position by means of a plurality of rotating or telescopic sections (16) anchoring the roof (1) with a post-tensioning effect, obtained by the combination of the tensile stresses of the attachment means (10-10', 11-11') in correlation with the compressive stresses of the sections (16) between the supports (A, B, C, D) and stops (15).

6. The roof according to the preceding claims, **characterised in that** the attachment means (10-10', 11-11') are selected from: cables, chains, ropes and belts.

7. The roof according to the preceding claims, **characterised in that** it comprises manual operating means for operating the roof (1).

8. The roof according to the preceding claims, **characterised in that** it further comprises at least one central hydraulic jack under the support, configured for varying the height of the ball joint (6) for the purpose of facilitating the rotation of the roof (1) when an angle greater than the angle achieved with that provided with the initial support is required, and coordinated with one another by means of a hydraulic system provided with an automated computer switchboard.
